# FASCICULE DE BREVET EUROPEEN

(11) **EP 2 771 280 B1**
(45) Date de publication et mention de la délivrance du brevet: **21.02.2018**
(21) Numéro de dépôt: 12775041.2
(22) Date de dépôt: 23.10.2012
(51) Int. Cl.: C01F 11/46, C22B 59/00

(54) **PROCEDE DE TRAITEMENT DE ROCHES PHOSPHATEES**
VERFAHREN ZUR BEHANDLUNG VON PHOSPHATGESTEIN
METHOD FOR TREATING PHOSPHATE ROCK

(30) Priorité: 24.10.2011 BE 201100619
(43) Date de publication de la demande: 03.09.2014
(73) Titulaire: Hydrometal SA, 4480 Engis (BE)
(72) Inventeur: GERMEAU, Alain, B-1160 Auderghem (BE); GUIDI, Tomizio, B-4100 Seraing (BE); FATI, Dorina, B-4121 Neuville En Condroz (BE)
(74) Mandataire: Gevers Patents
(86) Numéro de dépôt international: PCT/EP2012/070987
(87) Numéro de publication internationale: WO 2013/060689

(56) Documents cités:
- PL-B1- 155 815
- RU-C1- 2 293 781
- US-A- 3 580 703
- US-A- 4 588 570
- US-A- 5 173 284
- JAROSINSKI A ET AL: "Development of the Polish wasteless technology of apatite phosphogypsum utilization with recovery of rare earths", JOURNAL OF ALLOYS AND COMPOUNDS, ELSEVIER SEQUOIA, LAUSANNE, CH, vol. 200, no. 1-2, 8 octobre 1993 (1993-10-08), pages 147-150, XP024176494, ISSN: 0925-8388, DOI: 10.1016/0925-8388(93)90485-6 [extrait le 1993-10-08] cité dans la demande
- KOOPMAN C ET AL: "Extraction of lanthanides from the phosphoric acid production process to gain a purified gypsum and a valuable lanthanide by-product", HYDROMETALLURGY, ELSEVIER SCIENTIFIC PUBLISHING CY. AMSTERDAM, NL, vol. 58, no. 1, 1 novembre 2000 (2000-11-01), pages 51-60, XP004212102, ISSN: 0304-386X, DOI: 10.1016/S0304-386X(00)00127-4

## Description

La présente invention se rapporte à un procédé de traitement de sulfate de calcium contenant des terres rares comprenant les étapes de :
- une lixiviation à l'acide sulfurique de sulfate de calcium dihydraté contenant lesdites terres rares avec obtention d'une suspension formée d'une phase solide contenant ledit sulfate de calcium dihydraté et d'une phase liquide contenant lesdites terres rares en solution,
- une séparation entre ladite phase solide formée dudit sulfate de calcium dihydraté et de ladite phase liquide sous forme d'une liqueur contenant lesdites terres rares et l'acide sulfurique.

Un tel procédé est par exemple connu du document CN10197688. Dans ce document, un phosphogypse contenant des terres rares, issu d'un traitement de roche phosphatée pour la production d'acide phosphorique, est traité à l'acide sulfurique. Ensuite, la liqueur de lixivation est mise en contact avec du nitrate de calcium, de manière à maintenir les terres rares sous forme de nitrate dans la phase liquide. Selon ce document, le phosphogypse peut être un sulfate de calcium dihydraté ou hémihydraté issu d'une filtration primaire ou secondaire. Les rendements obtenus dans les exemples mentionnés sont inférieurs à 50 % par rapport à la teneur en terres rares initiale et la précipitation des terres rares au nitrate de calcium permet d'atteindre des rendements de précipitation compris entre 80 et 90 %.

Par les termes « phosphogypse » dans le présent contexte, on entend un sulfate de calcium répondant à la formule CaSO₄. xH₂O dans laquelle x vaut 0, ½ ou 2, provenant de roches phosphatées.

Dans une variante de ce procédé, décrite dans le document CN101440430, le phosphogypse est traité à l'acide sulfurique et éventuellement avec un sel d'ammonium soluble. Ensuite, de l'acide fluorhydrique ou un fluorure soluble est ajouté à la liqueur de lixiviation pour produire un fluorure de terres rares qui précipite et ce qui facilite ainsi sa récupération.

Une autre variante encore est décrite dans le document CN10159768 dans lequel du chlorure de calcium est utilisé pour précipiter les terres rares à partir de la liqueur de lixiviation.

On connait également, du document RU2158317, un procédé dans lequel un phosphogypse est traité par une solution de lixiviation pour obtenir une liqueur sulfurique contenant des terres rares. La liqueur sulfurique contenant les terres rares est ensuite neutralisée par une solution magnésienne sous forme d'oxyde de magnésium ou de carbonate de magnésium ou un composé combiné de ceux-ci par exemple sous forme d'hydromagnésite.

Du document WO2D11008137, on connait en outre un procédé d'extraction de terres rares à partir de phosphogypse par une étape de lixiviation à l'aide d'un acide sulfurique et d'un acide nitrique. Ensuite, les terres rares sont récupérées à l'aide d'une résine échangeuse de cations.

Il existe enfin de nombreux procédés dans lesquels des composés phosphorés organiques sont utilisés pour extraire les terres rares dans une phase organique avant de les solubiliser à nouveau dans une phase acide. Les terres rares sont alors précipitées de manière conventionnelle, comme par exemple à l'aide d'un composé calcique. (voir par exemple le document RU2172719).

Comme on peut le constater, de nombreux documents décrivent des traitements conventionnels de phosphogypse à l'acide sulfurique qui permettent d'obtenir une liqueur de lixiviation contenant les terres rares en solution. Dans une majorité de ces procédés, les auteurs se sont focalisés sur l'amélioration de la précipitation des terres rares à partir de la liqueur de lixiviation et permettent d'atteindre des rendements d'extraction de terres rares relativement faibles.

D'autres procédés utilisent des matières organiques qui, quoi que peut-être efficaces, sont souvent nocives à l'utilisation et rendent les opérations délicates et polluantes.

Il existe donc un besoin d'améliorer les rendements d'extraction des terres rares à partir de phosphogypse à l'aide d'un procédé simple à mettre en oeuvre et utilisant des matières compatibles avec les substances typiquement utilisées pour la production d'acide phosphorique afin de ne pas avoir d'impact sur les rendements de production d'acide phosphorique réalisées en amont de l'extraction des terres rares.

De plus, le phosphogypse produit lors de l'attaque des roches phosphatées pour produire de l'acide phosphorique est souvent mal valorisé ou non valorisable de par sa qualité souvent insuffisante. Il existe donc un besoin d'obtenir un phosphogypse qui serait plus pur et qui pourrait être utilisé dans d'autres applications telles que la construction ou autre.

Le document de Jarosinski et coll., (Journal of alloys and compounds, octobre 1993) divulgue également l'extraction de terres rares à partir de phosphogypse.

Selon ce document, du phosphogypse hémihydraté est lixivié à l'acide sulfurique concentré à 10% et à une température comprise entre 0 et 10°C, ce qui nécessite bien entendu un refroidissement. Lors de la mise en contact avec l'acide sulfurique, le sulfate de calcium hémihydraté (phosphogypse hémihydraté) est converti en dihydrate, conversion au cours de laquelle les impuretés telles que les terres rares, les phosphates, les fluorures, l'aluminium et le fer sont extraits de la phase solide. La phase de maturation de l'hémihydrate en dihydrate est simultanée à l'extraction des terres rares lors de la lixiviation. Le phosphogypse obtenu après lixiviation est divulgué comme étant suffisamment pur pour produire du plâtre par traitement thermique direct. Toutefois, bien que produisant des rendements acceptables, ce procédé reste néanmoins contraignant en ce qu'il demande d'assurer un refroidissement durant la lixiviation, étape typiquement exothermique et requiert un temps de séjour de 6 heures.

L'invention a pour but de pallier les inconvénients de l'état de la technique en procurant un procédé permettant de réaliser l'extraction des terres rares de manière entièrement compatible avec la production d'acide phosphorique et qui permet d'atteindre des rendements d'extraction de terres rares élevés et une qualité améliorée des sulfates de calcium obtenus et qui est simple et relativement écologique dans sa mise en oeuvre.

Pour résoudre ce problème, il est prévu suivant l'invention, un procédé tel qu'indiqué au début comprenant en outre, préalablement à ladite lixiviation, une étape de maturation de sulfate de calcium hémihydraté contenant lesdites terres rares avec une cristallisation en sulfate de calcium dihydraté par captage d'eau résiduelle et/ou d'humidité résiduelle.

Comme on peut le constater, le sulfate de calcium dihydraté utilisé comme substrat de lixiviation n'est pas, dans le procédé selon l'invention un sulfate de calcium dihydraté issu directement d'une étape de séparation ou un hémihydrate, mais bien un sulfate de calcium provenant d'une maturation lente de sulfate de calcium hémihydraté par captage d'eau résiduelle ou d'humidité résiduelle pour cristalliser sous la forme d'un sulfate de calcium dihydraté. Le sulfate de calcium hémi-hydraté est entreposé en tas. Ces tas sont imperméables à l'humidité ambiante et dès lors le sulfate de calcium hémihydraté ne peut pas capter l'eau de l'atmosphère, mais uniquement l'humidité résiduelle provenant du gâteau de filtration issu de la séparation entre du phosphogypse hémihydraté et la phase liquide lors de la production d'acide phosphorique.

Le sulfate de calcium dihydraté obtenu donc suivant l'invention est en fait considéré comme un sulfate de calcium parfait dans lequel les impuretés éventuellement présentes sont expulsées lors de la cristallisation très lente en la forme dihydratée qui a lieu lors de l'entreposage en tas par captage d'humidité résiduelle ou d'eau résiduelle.

De cette façon, le rendement d'extraction des terres rares par rapport à la teneur initiale dans le sulfate de calcium est d'au moins 80 %. De plus, le sulfate de calcium ainsi obtenu, après extraction des terres rares présente un degré de pureté plus élevé, non seulement parce qu'il ne contient plus de terres rares, mais également parce qu'il est appauvri en composés contaminants tels que le Na₂O et en composés phosphatés. De plus, le procédé selon l'invention ne requiert pas de refroidissement lors de l'étape de lixiviation qui est typiquement exothermique.

Dans une forme de réalisation préférentielle du procédé suivant l'invention, ledit acide sulfurique est une solution d'acide sulfurique présentant une concentration de 2 à 25 %, de préférence entre 2 et 20 %, plus particulièrement entre 5 et 18% et de la manière la plus préférentielle entre 7 et 12, voire entre 8 et 10 % en poids en poids par rapport au poids total de la solution.

Cette concentration s'avère être la concentration fournissant les meilleurs rendements de lixiviation et permet donc d'optimaliser les rendements d'extraction de terres rares à partir de phosphogypse.

Avantageusement, préalablement à ladite étape de maturation, ledit sulfate de calcium hémihydraté contenant lesdites terres rares est neutralisé par un agent basique de manière à fournir un pH compris entre 4 et 12, de préférence entre 6,5 et 11,5. Cet agent basique peut être par exemple de la soude ou de la chaux, comme de la chaux sous forme vive, éteinte ou de lait de chaux. Dans une forme de réalisation particulière, l'agent basique est de chaux vive.

Cette étape de neutralisation améliore le rendement d'extraction des terres rares et améliore la qualité du sulfate de calcium dihydraté obtenu par maturation lente puisque les conditions acides sont neutralisées avant la maturation et permet d'atteindre une réhydratation complète du sulfate de calcium.

Avantageusement, ladite lixiviation est effectuée sous agitation pendant une période de temps prédéterminée allant de 0,5 à 4 heures, de préférence de 1 à 2 heures, ce qui permet à nouveau d'obtenir un rendement de lixiviation optimal entre coût de mise en oeuvre du procédé, durée et puissance d'agitation et solubilisation des terres rares dans l'acide sulfurique.

De préférence, ladite lixiviation est précédée d'une étape de délitage des cristaux de sulfate de calcium dihydraté formés pendant la maturation, en particulier au moyen d'une turbine tournant à 6000 tours/minutes pendant une période de temps comprise entre 5 et 20 minutes, de préférence à température ambiante.

Par les termes «délitage » au sens de la présente invention, on entend une étape de division des agrégats cristallins de sulfate de calcium dihydratés en particules plus fines sous l'effet des forces de cisaillement.

Avantageusement, la température de lixiviation est comprise entre 10 et 70°C, et est de préférence la température ambiante, comme par exemple entre 20 et 30°C.

Dans une forme de réalisation préférentielle selon la présente invention, le rapport d'acide sulfurique/sulfate de calcium maturé lors de la lixiviation est compris entre 0,02 et 2,25, de préférence de 0,15 à 0,35.

Dans une forme de réalisation avantageuse selon l'invention, le procédé comprend en outre une étape de lavage de ladite phase solide issue de ladite séparation à l'eau ou de préférence avec de l'eau chaulée, et éventuellement, une étape ultérieure de séchage de ladite phase solide. Avantageusement, l'eau de lavage est recirculée pour augmenter le rendement de l'extraction et la réduire l'effet de dilution sur la concentration en acide sulfurique.

De manière avantageuse, ladite liqueur contenant lesdites terres rares et l'acide sulfurique est recirculée un nombre prédéterminé de fois compris entre 2 et 8 à ladite étape de lixiviation. De ceci, il résulte que l'acide sulfurique de la liqueur de lixiviation est réutilisé un nombre de fois prédéterminé, ce qui réduit la consommation d'acide sulfurique par rapport à la quantité de sulfate de calcium dihydraté après maturation lente, à savoir par rapport à la quantité de sulfate de calcium dihydraté à traiter. En outre, la liqueur sulfurique est enrichie en terres rares, ce qui permet d'obtenir un procédé plus rentable et de faciliter les étapes de récupération de celles-ci en aval de la lixiviation.

D'autres formes de réalisation du procédé suivant l'invention sont indiquées dans les revendications annexées.

Une liqueur sulfurique contenant des terres rares est obtenue par le procédé selon la présente invention. Cette liqueur sulfurique peut être soit traitée par des procédés conventionnels d'extraction in situ ou encore commercialisée en tant que telle pour des exploitants de terres rares. Il peut donc s'agir d'un produit intermédiaire ou d'un produit final en fonction des besoins du marché.

En effet, dans certaines applications, les terres rares sont, une fois achetées par un exploitant, solubilisées à nouveau dans de l'acide sulfurique, pour en faire des sels ou d'autres composés. Il est possible d'acquérir directement la liqueur sulfurique, soit pour en obtenir le produit final souhaité, tel qu'un composé de terres rares, soit pour en extraire les terres rares et en disposer. Il est également prévu que les terres rares puissent être extraites de la liqueur sulfurique *in situ* pour commercialiser celles-ci sous la forme souhaitée plutôt que sous la forme de liqueur.

La liqueur sulfurique obtenue peut présenter une concentration en acide sulfurique est comprise entre 2 à 25 % en poids par rapport au poids total de la liqueur sulfurique.

De préférence, la concentration en acide sulfurique est comprise entre 2 et 20 %, plus particulièrement entre 5 et 18% et de la manière la plus préférentielle entre 7 et 12, voire entre 8 et 10 % en poids.

Plus particulièrement, la liqueur sulfurique obtenue présente une concentration en terres rares qui est proche de la saturation (soit environ 5000 ppm) par rapport au poids total de la liqueur sulfurique.

Un sulfate de calcium dihydraté est susceptible d'être obtenu par le procédé selon le présente invention et présente une teneur en P₂O₅ résiduel inférieure à 0,05 % en poids par rapport au poids total de sulfate de calcium. Comme on peut le constater, cette teneur est très faible et permet de procurer un sulfate de calcium dihydraté à degré de pureté élevé. Le P₂O₅ est un élément perturbateur du temps de prise des ciments et plâtres et bénéficier d'un phosphogypse présentant une teneur en P₂O₅ aussi faible est réellement avantageux puisque la teneur en élément perturbateur de la prise est réduite drastiquement. A titre d'exemple, un phosphogypse conventionnel présente des teneurs en P₂O₅ entre 0,4 et 1 % en poids par rapport au poids total de sulfate de calcium.

Avantageusement, ledit sulfate de calcium dihydraté présente une teneur en Na₂O inférieure à 500 ppm (ou 0,05 % en poids) par rapport au poids total de sulfate de calcium. De cette façon, la teneur réduite en Na₂O limite les efflorescences dans le plâtre. A titre d'exemple, un phosphogypse conventionnel présente une teneur en Na₂O supérieure à 0,15 %. Après lixiviation de récupération de terres rares, la teneur résiduelle en Na₂O est inférieure à 500 ppm, ce qui correspond à la limite fixée pour une utilisation de sulfate de calcium dans les plaques de plâtre.

Dès lors, les plaques de plâtre peuvent également être fabriquées avec une teneur plus élevée en phosphogypse , ce qui jusqu'à présent était problématique avant un traitement ultérieur ou un mélange avec des sulfates de calcium ou gypse plus pur, ne comprenant pas ou peu de Na₂O.

De préférence, le sulfate de calcium dihydraté obtenu présente une teneur résiduelle en terres rares inférieure à 20% en poids par rapport à la teneur initiale dans le sulfate de calcium (soit environ 800 ppm).

Dans une forme de réalisation préférentielle, le sulfate de calcium obtenu présente une taille de particules d50 comprise entre 5 et 25 µm, de préférence supérieure à 8 µm, de manière plus préférentielle supérieure à 10 µm, et de préférence inférieure à 20 µm, de manière plus préférentielle inférieure à 15 µm, ce qui permet de limiter les étapes de réduction granulométrique dans les applications « plâtre ou ciment » pour lesquelles, la granulométrie du phosphogypse devait dans tous les cas être réduite.

Dans une forme de réalisation avantageuse, le sulfate de calcium obtenu présente une blancheur *Tappi* à une réflectance de 457 nm d'au moins 86, de préférence d'au moins 87. La présente invention permet donc un gain de blancheur qui est positif pour les applications « plâtre » en aval du procédé d'extraction. La blancheur *Tappi* à une réflectance de 457 nm pour un phsophgypse conventionnel est d'environ 84 alors que pour celui obtenu par un procédé selon la présente invention, la blancheur *Tappi* peut aller jusque 87 et plus.

Plus particulièrement, le sulfate de calcium obtenu présente une blancheur dans le système L, a, b caractérisée par les valeurs suivantes : L > 95 ; a > -0.01, b < 1,6. Un phosphogypse conventionnel présente généralement une blancheur dans le système L, a, b caractérisée par les valeurs moyennes : L = 94.8 ; a = -0,190, b =2.72

D'autres caractéristiques, détails et avantages de l'invention ressortiront de la description donnée ci-après, à titre non limitatif et en faisant référence aux exemples ci-dessous.

La présente invention est donc relative à un procédé de traitement de sulfate de calcium contenant des terres rares de préférence issu de la production d'acide phosphorique à partir d'une roche phosphatée.

Un tel sulfate de calcium contenant des terres rares peut être obtenu à l'aide d'un procédé classique qui consiste à faire réagir la roche phosphatée avec l'acide sulfurique dans des conditions donnant lieu à une cristallisation de sulfate de calcium dihydraté ou gypse (CaSO₄.2H₂O). La bouillie de gypse obtenue dans un premier réacteur peut être ensuite soumise, dans un second réacteur, à une maturation permettant un grossissement des grains de sulfate formés, et cela pour augmenter la filtrabilité. La bouillie maturée est ensuite filtrée avec obtention d'un acide phosphorique présentant une teneur en P₂O₅ libre de l'ordre de 25 à 35 % en poids.

Après séparation de l'acide phosphorique de production à partir de la bouillie de gypse, le reste de celle-ci est ensuite mélangé à nouveau à de l'acide sulfurique concentré et le tout est éventuellement chauffé pour convertir le gypse en sulfate de calcium hémihydraté. La seconde bouillie ainsi formée est filtrée à son tour et le filtrat acide est recyclé à l'étape d'attaque (voir FR 1485940). Le sulfate de calcium, ainsi recristallisé en hémihydrate, est très pur, avec une très bonne filtrabilité et est une matière première de choix pour l'étape de lixiviation du procédé selon l'invention.

Suivant une variante connue de ce procédé, un hémihydrate est obtenu, après avoir appliqué les conditions du procédé classique de formation d'une bouillie de gypse, mais en soumettant directement celle-ci à un mélange avec de l'acide sulfurique et éventuellement à un chauffage, sans en séparer préalablement l'acide phosphorique de production. La bouillie d'hémihydrate obtenue est filtrée en donnant un gâteau d'hémihydrate très pur, mais un filtrat formé d'un mélange d'acide phosphorique et d'acide sulfurique. Pour obtenir un acide phosphorique de production de qualité, il faut alors soumettre ce mélange à une installation de désulfatation.

L'hémihydrate ainsi obtenu est également un candidat particulièrement avantageux pour l'extraction des terres rares suivant le procédé selon l'invention.

D'autres procédés de production d'acide phosphorique fort semblables au précédent comprenant une conversion de dihydrate en hémihydrate (voir par exemple GB-1164836, US-A-3984525) permettent également d'obtenir un sulfate de calcium hémihydraté avantageux pour l'extraction des terres rares suivant la présente invention.

Un sulfate de calcium contenant des terres rares peut également être par exemple obtenu par un procédé dans lequel la roche phosphatée est attaquée avec de l'acide sulfurique à des températures et concentrations en P₂O₅ et/ou SO₃ particulières, une bouillie de sulfate de calcium sous forme d'hémihydrate (CaSO₄.1/2H₂O) ou d'anhydrite. La bouillie obtenue dans un premier réacteur peut ensuite être soumise, dans un second réacteur, à une maturation permettant un grossissement des cristaux de sulfate de calcium formés, et cela pour augmenter la filtrabilité. La bouillie maturée dans le second réacteur est ensuite filtrée avec obtention d'un acide phosphorique présentant une teneur en P₂O₅ libre de l'ordre de 25 à 35 % en poids et d'un gâteau d'hémihydrate de sulfate de calcium.

On peut aussi appliquer le procédé suivant la présente invention sur un sulfate de calcium hémihydraté obtenu à partir de procédés comprenant une triple cristallisation de sulfate de calcium d'abord en hémihydrate, puis en dihydrate et enfin à nouveau en hémihydrate (v. US-A-4588570).

On peut également obtenir un sulfate de calcium contenant des terres rares sous forme d'hémihydrate selon l'enseignement du document WO 2011/067321. Selon ce procédé de production d'acide phosphorique, une première bouillie de cristaux de sulfate de calcium dihydraté en suspension dans une phase aqueuse acide est formée. Les conditions d'attaque sont telles qu'elles prévoient une réaction sensiblement stoechiométrique entre l'acide sulfurique introduit et le calcium contenu Cette première bouillie est alors directement soumise, dans sa totalité, à une étape de conversion qui consiste à la chauffer à une température supérieure à 90°C, ce qui occasionne de manière connue une solubilisation des cristaux de gypse, une libération du P₂O₅ cocristallisé dans le gypse pendant l'étape d'attaque et une recristallisation du sulfate de calcium sous forme d'hémihydrate qui présente des cristaux de forme sphérique et sont de taille courante, en présentant par exemple un d₅₀ de 60 µm, ce qui donne un gâteau de filtration présentant un excellent coefficient de filtration.

Ces cristaux de sulfate de calcium sous forme d'hémihydrate constituent également une matière première de choix pour l'extraction des terres rares initialement contenues dans la roche phosphatée.

Une variante de ce procédé a également fait l'objet d'une demande de brevet PCT/EP2011/059128 non encore publiée. Ce procédé est un procédé de production d'acide phosphorique par attaque de roche phosphatée de pauvre qualité au moyen d'acide sulfurique qui permette d'obtenir un acide phosphorique de production de qualité et un bon rendement d'extraction du P₂O₅ à partir de la roche. Ce procédé comprend des étapes similaires à celles décrites ci-dessus. En outre, une source de fluor en une teneur de 1% à 5% en poids de F par rapport au P₂O₅ contenu dans la roche phosphatée est ajoutée à la première bouillie. Le sulfate de calcium sous forme d'hémihydrate obtenu dans le deuxième gâteau de filtration est également un bon candidat pour le procédé de récupération de terres rares selon la présente invention.

Certaines roches phosphatées, et particulièrement les roches d'origine « ignée », contiennent jusqu'à 1 % de lanthanides également appelés « terres rares ». C'est notamment le cas du phosphate Kola. Comme on peut le comprendre de ce qui précède, dans les procédés de production d'acide phosphorique à partir de roches phosphatées, du sulfate de calcium hémihydraté est obtenu comme co-produit de l'acide phosphorique. Environ 80 % de tous les lanthanides présents initialement dans la roche phosphatée se trouvent dans le phosphogypse co-produit.

En pratique, le sulfate de calcium hémihydraté obtenu selon l'un quelconque des procédés décrits ci-avant est ensuite filtré et lavé pour être récupéré de la bouille ou du gâteau dans lequel il se trouve. Ce sulfate de calcium hémihydraté est dans une forme de réalisation préférentielle neutralisée par une base, par exemple de la chaux, sous forme de chaux vive. Le sulfate de calcium hémihydraté et neutralisé est ensuite entreposé en tas, généralement à l'air libre pour permettre sa maturation. Le sulfate de calcium hémihydrate ainsi entreposé absorbe l'humidité et/ou de l'eau résiduelle et se convertit en cristaux de sulfate de calcium dihydraté très purs, comme mentionné ci-avant. Ce sulfate de calcium ainsi maturé est relativement pur, sec et peut être aisément manipulé et traité pour une valorisation commerciale ultérieure. C'est à partir de ce sulfate de calcium dihydraté et maturé que les terres rares sont extraites.

Le sulfate de calcium dihydraté et maturé se présente sous forme d'agrégats qui sont, préalablement à la lixiviation, délitées au moyen d'une turbine tournant à 6000 tours/minutes pendant une période de temps comprise entre 5 et 20 minutes, de préférence à température ambiante, ce qui permet d'obtenir des particules fines de sulfate de calcium dihydraté de petites taille.

Les particules fines de sulfate de calcium contenant lesdites terres rares sont alors mises en suspension sous agitation pendant une période de temps prédéterminée allant de 0,5 à 4 heures dans de l'acide sulfurique à 2 à 25% en poids et les terres rares sont lixiviées pour se retrouver dans la phase aqueuse, majoritairement. La phase solide formée dudit sulfate de calcium dihydraté est ensuite séparée de ladite phase liquide qui est sous forme d'une liqueur contenant lesdites terres rares et l'acide sulfurique. Un exemple de séparation appropriée est une filtration. La phase solide issue de ladite séparation est ensuite lavée à l'eau, et éventuellement, séchée. De préférence, ladite liqueur contenant lesdites terres rares et l'acide sulfurique est recirculée un nombre prédéterminé de fois compris entre 2 et 8 à ladite étape de lixiviation afin de concentrer la liqueur en terres rares.

En conséquence, du procédé suivant la présente invention, deux co-produits sont obtenus, il s'agit d'une part d'une liqueur sulfurique contenant jusqu'à 5000 ppm de terres rares et présentant une concentration en acide sulfurique qui est comprise entre 2 à 25 % en poids par rapport au poids total de la liqueur sulfurique, et d'autre part un sulfate de calcium dihydraté très pur.

Le gypse ainsi obtenu après lixiviation est épuré en terres rares, mais est également épuré en autres éléments tels que le P₂O₅ et le Na₂O qui sont perturbants pour la production de plâtre. Un gypse maturé à l'air libre, après neutralisation par de la chaux vive (gypse vert) a été analysé et les analyses ont été répétées sur le gypse obtenu après lixiviation des terres rares à l'acide sulfurique à 13%. Les résultats sont présentés au tableau 1.

**Tableau 1.-**

| | Gypse avant lixiviation | Gypse lixivié |
|---|---|---|
| **P₂O_{5 (1)}** | 0,4 - 0,5 % | < 0,05 % |
| **Na₂O** | > 0,15% | < 500 ppm |
| **As** | < 0,5 ppm | < 0,1 ppm |
| **Th** | 20 - 30 ppm | < 5 ppm |
| **U₃O₈** | 2 ppm | 1 ppm |
| **Malvern :** d50 | 0 - 4 cm | 10-15 µm |
| **Humidité** | <10% | Filtration sous vide : 20-25 % |
| | | Sous P 6 bar : < 10 % |
| **Blancheur : L,a,b** | 94.8;-0.190; 2.72 | 95.6 ; -0.008 ; 1.35 |
| **Réflectance 457 nm (Tappi)** | 84.6 | 87.7 |

| | | |
|---|---|---|
| (1) = P₂O₅ total (soluble + inattaqué) | | |

Comme on peut le constater, la teneur en P₂O₅ (élément perturbateur du temps de prise du ciment et du plâtre) du gypse lixivié est au moins 10 fois plus basse et la valeur Na₂O (générateur d'efflorescences dans le plâtre) est en dessous de la limite (500ppm) fixée pour une utilisation dans les plaques de plâtres. De plus, tout l'arsenic (As) est pratiquement éliminé, la teneur résiduelle en U₃O₈ est pratiquement nulle et le thorium est fortement réduit (10 fois). La granulométrie est en outre beaucoup plus fine ce qui devrait également être un avantage et le sulfate de calcium gagne en blancheur, gain de 0.8 sur le « L» et 3.1 sur la blancheur Tappi. La filtration ici effectuée sous pression permet de maintenir la teneur en eau résiduelle en dessous de 10%.

La liqueur sulfurique obtenue a également été analysée quant à sa teneur en terres rares. Le tableau 2 analyse typique après 2 attaques successives et un lavage à contre courant du sulfate de calcium maturé et préalablement neutralisé par de la chaux vive par un acide sulfurique à 13%. Les analyses des lanthanides présentées au tableau 2 sont effectuées par ICPAES (analyse par spectrophotométrie d'émission atomique par plasma d'argon à couplage inductif).

**Tableau 2.-**

| Analyses typique de la solution finale | | |
|---|---|---|
| Elément | Concentration (ppm) | Répartition (%) |
| Ce | 1380 | 44,01 |
| Dy | 24,8 | 0,79 |
| Er | 8,45 | ,027 |
| Eu | 19,2 | 0,61 |
| Gd | 55,3 | 1,76 |
| Ho | 4,34 | 0,14 |
| La | 792 | 25,26 |
| Lu | 0,34 | 0,01 |
| Nd | 503 | 16,04 |
| Pr | 127 | 4,05 |
| Sc | 0,655 | 0,02 |
| Sm | 90,9 | 2,90 |
| Tb | 12,4 | 0,40 |
| Tm | 0,775 | 0,02 |
| Y | 113 | 3,60 |
| Yb | 3,31 | 0,11 |
| Lanthanides | 3135 | 100 |

Le procédé selon la présente invention présente donc un rendement particulièrement élevé d'extraction de terres rares ou de lanthanides. Le rendement d'extraction est déterminé pour chaque élément et de façon globale au départ de la teneur en lanthanides du gypse avant (gypse vert) et après la lixiviation sulfurique qui est multiplié par 100.

L'extraction des terres rares a été effectuée par une lixiviation à l'acide sulfurique dans les conditions décrites ci-dessus. Les rendements obtenus sont ceux présentés au tableau 3.

**Tableau 3.-**

| Elément | Gypse sec 250°C (ppm | Gateau de filtration sec 250 °C (ppm | Rendement lixiviation (%) |
|---|---|---|---|
| Ce | 2310 | 313 | 86.5 |
| Dy | 45.5 | 4.84 | 89.4 |
| Er | 15.7 | 2.13 | 86.4 |
| Eu | 34.9 | 4.61 | 86.8 |
| Gd | 98.7 | 12.3 | 87.5 |
| Ho | 7.37 | 0.572 | 92.2 |
| La | 1450 | 276 | 81.0 |
| Lu | 0.568 | 0.0666 | 88.3 |
| Nd | 899 | 121 | 86.5 |
| Pr | 235 | 35.6 | 84.9 |
| Sc | 1.21 | 0.249 | 79.4 |
| Sm | 163 | 24 | 85.3 |
| Tb | 7.45 | 1.0 | 86.6 |
| Tm | 1.36 | 0.10 | 92.6 |
| Y | 180 | 19 | 89.4 |
| Yb | 5.6 | 0.609 | 89.1 |
| Lanthanides | 5455 | 815 | 85.1 |

Des exemples détaillées et comparatifs vont maintenant être fournis ci-dessous.

### Exemple 1.-détermination par plasma des lanthanides dans des matrices calciques d'émission atomique par plasma d'argon à couplage inductif (ICPAES).

### a) Préparation de l'échantillon et analyse par spectrophotométrie

Cette méthode est appliquée aux phosphates calciques, gypses et autres matrices calciques (ex. acide sulfurique ayant été utilisé pour mettre en solution le gypse) et permet de doser les éléments suivants : Ce, Dy, Er, Eu, Gd, Ho, La, Lu, Nd, Pr, Sc, Sm, Tb, Tm, Y, Yb.

### b) préparation des échantillons

Les échantillons sont réalisés suivant les protocoles suivants :
Phosphate calcique : Peser ± 1g d'échantillon et l'introduire dans un vase en téflon de 250ml. Noyer le produit avec de l'eau nanopure. Ajouter 25ml de HCl, 10ml de HNO₃, 2ml de HClO₄, 15ml de HF. Aller à sec. Laisser un peu refroidir. Décoller le produit avec un peu d'eau nanopure et quelques gouttes de H₂O₂ . Ajouter 15ml de HCl, 5ml de HNO₃, 2ml de HClO₄, 15ml de HF. Retourner à sec. Refroidir. Décoller le produit avec un peu d'eau nanopure et quelques gouttes de H₂O₂. Ajouter 5ml de HCl, 5ml de HNO₃, 40ml d'eau nanopure. Couvrir le vase d'un verre de montre et porter à ébullition jusqu'à l'obtention d'une solution limpide (± 30 minutes).

Retirer le vase de la plaque chauffante et enlever le verre de montre en le rinçant avec un jet de pissette d'eau nanopure. Laisser refroidir et transvaser la solution dans un ballon jaugé de 100ml. Amener au volume avec de l'eau nanopure. Agiter et filtrer sur un filtre MN 640 m.

Gypse : Peser ± 1g d'échantillon (séché à 250°C) et l'introduire dans un ballon jaugé de 100ml. Ajouter 30 ml d'eau nanopure, 10ml de HNO₃ et porter à ébullition jusqu'à solubilisation complète. Refroidir le ballon jaugé. Amener au volume avec de l'eau nanopure, agiter et filtrer sur un filtre MN 640 m.

Acide sulfurique dilué : Peser ±10g d'échantillon dans un ballon jaugé de 100ml. Ajouter 30ml d'eau nanopure, 5ml de HCl, 5ml HNO₃ et porter à ébullition. Refroidir le ballon jaugé. Amener au volume avec de l'eau nanopure, agiter et filtrer sur un filtre MN 640 m.

### c) mesure par spectrophotométrie d'émission atomique par plasma d'argon

Le nébulisateur commercial Meinhard TR 50 C1 avec chambre cyclonique est utilisé dans l'appareil de type JOBIN_YVON JY238 ULTRACE

### d) préparation des étalons

Lanthanides Solution A (solution intermédiaire) : Composition : 10ppm Ho, Lu, Sc, Tb, Tm ; 20ppm Dy, Er, Eu, Yb; 5% HNO₃.

Dans un ballon jaugé de 500ml, ajouter :
5ml des solutions à 1g/l en Ho, Lu, Sc, Tb, Tm
10ml des solutions à 1g/l en Dy, Er, Eu, Yb
25ml d'acide nitrique.

Amener la solution au volume avec de l'eau nanopure et agiter.

### Lanthanides Matrice Ca B(blanc)

Dans un ballon jaugé de 200ml, introduire 1.9362g de CaCO₃, 10ml HCL et 10ml HNO₃. Amener au volume avec de l'eau nanopure et agiter. Lanthanides Matrice Ca H et QC Composition : 50ppm Ce, La ; 20ppm Nd ; 5ppm Gd, Pr, Sm, Y ; 2ppm Dy, Er, Eu, Yb ; 1 ppm Ho, Lu, Sc, Tb, Tm ; 0.9681% CaCO₃; 2.5% HNO₃, 2.5% HCl

Dans un ballon jaugé de 1 litre, ajouter :
50ml des solutions à 1g/l en Ce, La
20ml de la solution à 1g/l en Nd
5ml des solutions à 1g/l en Gd, Pr, Sm, Y
100ml de la solution intermédiaire A
9.681g de CaCO₃ suprapur.
25ml de HCl et 25ml de HNO₃.

Amener la solution au volume avec de l'eau nanopure et agiter.

L'étalon haut est utilisé aussi comme contrôle.

### e) validation des résultats

Dans le but de vérifier le bon fonctionnement de la nébulisation des échantillons et la stabilité du système, un standard de contrôle est inclus au moins une fois dans la série d'échantillons.

L'étude statistique des valeurs du standard de contrôle définit des niveaux d'alerte et de rejet. Ces niveaux peuvent varier en raisons de modifications techniques. Les valeurs en vigueur de ces niveaux sont intégrées dans le programme d'analyse.

Le dépassement d'une limite d'alerte n'invalide pas les résultats des analyses mais oblige à une surveillance accrue de l'instrument. Le dépassement d'une limite de rejet invalide les résultats des analyses. Les échantillons doivent de nouveau être analysés après action(s) corrective(s) et ré-étalonnage de l'instrument.

### Exemple 2. Extraction de terres rares à partir de gypse obtenu par un procédé selon l'invention

Dans une cuve de 10 l, 2330 g de gypse vert (maturé et prélablement neutralisé à la chaux vive) sont dispersés dans 5 l d'acide sulfurique à 13 % au moyen d'une turbine tournant à 6000 RPM pendant 10' à t° ambiante pour effectuer un délitage des agglomérats formés pendant la maturation. A la fin du délitage, la t° de la suspension atteint 35 à 40°C. La suspension est ensuite chauffée à 60°C et agitée au moyen de la turbine tournant à 1000 RPM pendant 3 heures. La suspension est ensuite filtrée sur un Büchner de 5 dm² muni d'un média filtrant MN85/90.

Le gâteau est alors lavé avec 3 fois 2,4 l d'eau à 40°C puis séché à 50°C.

Les analyses des lanthanides dans le gâteau et des différents filtrats sont présentées aux tableaux 2 et 3. Le rendement d'extraction est de 85,1 %.

### Exemple 3.-Extraction de terres rares à partir de gypse obtenu par un procédé selon l'invention

Dans une cuve de 10 l, 2330 g de gypse vert (maturé et prélablement neutralisé à la chaux vive) sont dispersés dans 5 l d'acide sulfurique à 17% dans les mêmes conditions que celles de l'exemple 2.

Le rendement d'extraction est de 85,7 %.

### Exemple 4.-Extraction de terres rares à partir de gypse obtenu par un procédé selon l'invention

Dans une cuve de 10l, 2330g de gypse dihydraté maturé lentement (soit 30 % de matières solides) sont dispersés dans 5 l d'acide sulfurique à 8% en poids (soit rapport H₂SO₄/CaSO₄.2H₂O = 0,19) au moyen d'une turbine tournant à 6000 RPM pendant 10' à t° ambiante. La suite de l'attaque est effectuée dans les mêmes conditions que l'exemple 2 (référence) sauf la température de lixiviation qui est de 40°C au lieu de 60°C.

Le rendement d'extraction est de 79,2 %.

### Exemple 5.- Analyse des lanthanides dans différentes roches phosphatées.

L'analyse des lanthanides dans différentes roches phosphatées est présentée au tableau 4.

**Tableau 4.-**

| Roches | Lanthanides (ppm) |
|---|---|
| Roches ignées (Kola) | 7984 |
| Roches ignées (Phalborwa) | 8090 |
| Phosphates de Floride | 3000 |
| Phosphates marocains | 2000 |

### Exemple 6.- Extraction de terres rares à partir de gypse

Dans une cuve de 10 l, 2330 g de gypse vert (maturé et prélablement neutralisé à la chaux vive) sont dispersés dans 5 l d'acide sulfurique à 13 % au moyen d'une turbine tournant à 6000 RPM pendant 10' à t° ambiante pour effectuer un délitage des agglomérats formés pendant la maturation. A la fin du délitage, la t° de la suspension atteint 35 à 40°C à cause des frictions générées lors de cette opération. La suspension est ensuite laissée à refroidir et puis agitée au moyen de la turbine tournant à 1000 RPM pendant 3 heures. La suspension est ensuite filtrée sur un Büchner de 5 dm² muni d'un média filtrant MN85/90.

Le gâteau est alors lavé avec 3 fois 2,4 l d'eau à 40°C puis séché à 50°C.

Les analyses de certains des lanthanides dans le gâteau et des différents filtrats sont présentées au tableau 5 et le rendement de lixiviation est supérieur à 80%.

**Tableau 5.-**

| | Gypse ex. hémihydrate chaulé | | |
|---|---|---|---|
| | avant lixiviation | après lixiviation | rendement de lixiviation |
| | s/sec 250°C | | % |
| | ppm | ppm | |
| Ce | 2310 | 347 | 84,98 |
| Gd | 98,6 | 12,6 | 87,22 |
| La | 1450 | 309 | 78,69 |
| Nd | 899 | 144 | 83,98 |
| Pr | 235 | 35,8 | 84,77 |
| Sm | 163 | 24,2 | 85,15 |
| Y | 180 | 21,5 | 88,06 |
| Total | 5336 | 894 | 83,24 |

### Exemple 7.- Extraction de terres rares à partir de gypse

Dans une cuve de 10 l, 2330 g de gypse maturé sont dispersés dans 5 l d'acide sulfurique à 13 % au moyen d'une turbine tournant à 6000 RPM pendant 10' à t° ambiante pour effectuer un délitage des agglomérats formés pendant la maturation. A la fin du délitage, la t° de la suspension atteint 35 à 40°C à cause des frictions générées lors de cette opération. La suspension est ensuite laissée à refroidir et puis agitée au moyen de la turbine tournant à 1000 RPM pendant 3 heures. La suspension est ensuite filtrée sur un Büchner de 5 dm² muni d'un média filtrant MN85/90.

Le gâteau est alors lavé avec 3 fois 2,4 l d'eau à 40°C puis séché à 50°C.

Les analyses de certains des lanthanides dans le gâteau et des différents filtrats sont présentées au tableau 6.

**Tableau 6.-**

| | avant lixiviation | après lixiviation | rendement de lixiviation |
|---|---|---|---|
| | s/sec 250°C | | % |
| | ppm | ppm | |
| Ce | 2310 | 1660 | 28,14 |
| Gd | 104 | 57,9 | 44,33 |
| La | 1550 | 1230 | 20,65 |
| Nd | 841 | 557 | 33,77 |
| Pr | 237 | 147 | 37,97 |
| Sm | 155 | 96,8 | 37,55 |
| Y | 169 | 82,9 | 50,95 |
| Total | 5366 | 3832 | 28,59 |

### Exemple 8.- Extraction de terres rares à partir de gypse non chaulé selon l'invention

Dans une cuve de 10 l, 2330 g de gypse maturé sont dispersés dans 5 l d'acide sulfurique à 8 % au moyen d'une turbine tournant à 6000 RPM pendant 10' à t° ambiante pour effectuer un délitage des agglomérats formés pendant la maturation. A la fin du délitage, la t° de la suspension atteint 35 à 40°C à cause des frictions générées lors de cette opération. La suspension est ensuite laissée à refroidir et puis agitée au moyen de la turbine tournant à 1000 RPM pendant 3 heures. La suspension est ensuite filtrée sur un Büchner de 5 dm² muni d'un média filtrant MN85/90.

Le gâteau est alors lavé avec 3 fois 2,4 l d'eau à 40°C puis séché à 50°C.

Les analyses de certains des lanthanides dans le gâteau et des différents filtrats sont présentées au tableau 7.

**Tableau 7.-**

| | Gypse ex. hémihydrate non chaulé | | |
|---|---|---|---|
| | avant lixiviation | après lixiviation | rendement de lixiviation |
| | s/sec 250°C | | % |
| | ppm | ppm | |
| Ce | 2310 | 1750 | 24,24 |
| Gd | 98,6 | 40,9 | 58,52 |
| La | 1450 | 1090 | 24,83 |
| Nd | 899 | 610 | 32,15 |
| Pr | 235 | 160 | 31,91 |
| Sm | 163 | 93,3 | 42,76 |
| Y | 180 | 104 | 42,22 |
| Total | 5336 | 3848 | 28,97 |

### Exemple comparatif 1.- Extraction de terres rares à partir de phosphogypse non maturé lentement en tas

2330 g de gypse dihydraté issus d'un procédé dit « dihydrate » c'est-à-dire prélevé directement à partir d'une bouillie de roche phosphatée et d'acide sulfurique après filtration sont attaqués dans les mêmes conditions que celles de l'exemple 2.

Le rendement d'extraction est de 14 %

### Exemple comparatif 2. Extraction de terres rares à partir de phosphogypse maturé à 50% de matière solide

Dans une cuve de 10 l, 5261 g de gypse vert (maturé et préalablement neutralisé à la chaux vive) sont dispersés dans 5 l d'acide sulfurique à 8 % (soit 50% de matières solides, rapport H₂SO₄/CaSO₄.2H₂O = 0,08) dans les mêmes conditions que celles de l'exemple 2.

Le rendement d'extraction est de 59,4 %.

Il est bien entendu que la présente invention n'est en aucune façon limitée aux formes de réalisations décrites ci-dessus et que bien des modifications peuvent y être apportées sans sortir du cadre des revendications annexées.

Les terres rares présentes dans les liqueurs de lixiviation obtenues suivant l'invention peuvent alors être extraites selon des méthodes conventionnelles, comme par exemple
- par extraction par solvants en milieu sulfate (NPPA) ou nitrique (TBP/D2EHPA) (voir Journal of Alloys and Compounds, 8 octobre 1993, Pages 147-150 - A. Jarosinski, J., J. kowalczyk, Cz. Mazanek, ou Journal of Rare Earths, Volume 26, Août 2008, Pages 544-551, M. Mahmoud GHADA, T. El Hazek NABIL, M. Farag AHMAD, M. El Hussaini OMNEYA,),
- par Précipitation sous forme de sels de sulfate doubles par addition de Na₂SO₄ ou K₂SO₄ (voir Minerals Engineering 23 (2010) 536-540, Renata D. Abreu, Carlos A. Morais, ou Journal of SoLID State Chemistry 22, 419-422 (1977) P.A. Degtiarev, A.N. Pokrovskil, L.M. Kovba and F.M. Korytnaia.)
- par Précipitation sous forme d'oxalate par addition d'acide oxalique (voir J. Chem, tech. Biotechnol. 1985, 35A, 5-14, Fathi Habashi ou CN 101979366 ou encore JP 1183415.
- D'autres techniques d'extractions sont également possibles comme la précipitation sous forme de fluore insoluble par addition de HF, l'extraction par résine échangeuse d'ions chargées ou non en solvant de la famille EDTA, la cristallisation fractionnée, la précipitation par oxydation dans le cas du Ce ou de l'Eu, la précipitation sélective au pyrophosphate de soude ou à l'acide fluorhydrique ou encore l'extraction par solvant sélective moyennant ajustement pH.

## Revendications

1. Procédé de traitement de sulfate de calcium contenant des terres rares comprenant les étapes de :
- une lixiviation à l'acide sulfurique de sulfate de calcium dihydraté contenant lesdites terres rares avec obtention d'une suspension formée d'une phase solide contenant ledit sulfate de calcium dihydraté et d'une phase liquide contenant lesdites terres rares en solution,
- une séparation entre ladite phase solide formée dudit sulfate de calcium dihydraté et de ladite phase liquide sous forme d'une liqueur contenant lesdites terres rares et l'acide sulfurique,
**caractérisé en ce que** ledit procédé comprend en outre, préalablement à ladite lixiviation, une étape de maturation de sulfate de calcium hémihydraté contenant lesdites terres rares avec une cristallisation en sulfate de calcium dihydraté par captage d'eau résiduelle et/ou d'humidité résiduelle.

2. Procédé selon la revendication 1, dans lequel ledit acide sulfurique est une solution d'acide sulfurique présentant une concentration de 2 à 25 %, de préférence entre 2 et 20 %, plus particulièrement entre 5 et 18 % et de la manière la plus préférentielle entre 7 et 12, voire entre 8 et 10 % en poids par rapport au poids total de la solution.

3. Procédé selon la revendication 1 ou 2, dans lequel, préalablement à ladite étape de maturation, ledit sulfate de calcium hémihydraté contenant lesdites terres rares est neutralisé par un agent basique.

4. Procédé selon l'une quelconque des revendications 1 à 3, dans lequel ladite lixiviation est effectuée sous agitation pendant une période de temps prédéterminée allant de 0,5 à 4 heures, de préférence de 1 à 2 heures.

5. Procédé selon l'une quelconque des revendications 1 à 4, dans lequel ladite lixiviation est précédée d'une étape de délitage des cristaux de sulfate de calcium dihydraté formés pendant la maturation, pendant une période de temps comprise entre 5 et 20 minutes, de préférence à température ambiante.

6. Procédé selon l'une quelconque des revendications 1 à 5 dans lequel la température de lixiviation est comprise entre 10 et 70°C, et est de préférence la température ambiante, à savoir entre 20 et 30°C.

7. Procédé selon l'une quelconque des revendications précédentes, dans lequel le rapport d'acide sulfurique/sulfate de calcium maturé lors de la lixiviation entre compris entre 0,1 et 2,25, de préférence de 0,15 à 0,35.

8. Procédé selon l'une quelconque des revendications 1 à 5, comprenant en outre une étape de lavage de ladite phase solide issue de ladite séparation à l'eau, et éventuellement, une étape ultérieure de séchage de ladite phase solide.

9. Procédé selon l'une quelconque des revendications précédentes, dans lequel ladite liqueur contenant lesdites terres rares et l'acide sulfurique est recirculée un nombre prédéterminé de fois compris entre 2 et 8 à ladite étape de lixiviation.

## Patentansprüche

1. Verfahren der Behandlung von Calciumsulfat, das Metalle der Seltenen Erden enthält, welches die folgenden Schritte umfasst:
- eine Auslaugung mit Schwefelsäure von Calciumsulfat-Dihydrat, welches die erwähnten Metalle der Seltenen Erden enthält, mit Erhalt einer Suspension gebildet aus einer festen Phase, die das erwähnte Calciumsulfat-Dihydrat enthält, und aus einer flüssigen Phase, die die erwähnten Metalle der Seltenen Erden gelöst enthält,
- eine Trennung zwischen der erwähnten festen Phase, gebildet aus dem erwähnten Calciumsulfat-Dihydrat, und der erwähnten flüssigen Phase in Form einer Lösung, welche die erwähnten Metalle der Seltenen Erden und die Schwefelsäure enthält.
**dadurch gekennzeichnet, dass** das erwähnte Verfahren ferner, vor der erwähnten Auslaugung, einen Schritt der Reifung von Calciumsulfat-Hemihydrat, welches die erwähnten Metalle der Seltenen Erden enthält, mit einer Kristallisation in Calciumsulfat-Dihydrat durch Abscheidung von Restwasser und/oder Restfeuchtigkeit umfasst.

2. Verfahren nach Anspruch 1, in dem die erwähnte Schwefelsäure eine Lösung von Schwefelsäure mit einer Konzentration von 2 bis 25 Gew.-% ist, bevorzugt zwischen 2 und 20 Gew.-%, genauer gesagt zwischen 5 und 18 Gew.-% und am besten zwischen 7 und 12 Gew.-% bzw. zwischen 8 und 10 Gew.-% im Verhältnis zum Gesamtgewicht der Lösung.

3. Verfahren nach Anspruch 1 oder 2, in dem das erwähnte Calciumsulfat-Hemihydrat, welches die erwähnten Metalle der Seltenen Erden enthält, vor dem erwähnten Schritt der Reifung durch eine basische Substanz neutralisiert wird.

4. Verfahren nach irgendeinem der Ansprüche 1 bis 3, in dem die erwähnte Auslaugung unter Schütteln während eines vorbestimmten Zeitraums zwischen 0,5 und 4 Stunden erfolgt, bevorzugt zwischen 1 und 2 Stunden.

5. Verfahren nach irgendeinem der Ansprüche 1 bis 4, in dem vor der erwähnten Auslaugung ein Schritt der Spaltung der Calciumsulfat-Dihydrat-Kristalle, welche während der Reifung gebildet wurden, während eines Zeitraums zwischen 5 und 20 Minuten erfolgt, bevorzugt bei Raumtemperatur.

6. Verfahren nach irgendeinem der Ansprüche 1 bis 5, in dem die Temperatur der Auslaugung zwischen 10 und 70 °C liegt, und bevorzugt Raumtemperatur ist, und zwar zwischen 20 und 30 °C.

7. Verfahren nach irgendeinem der vorigen Ansprüche, wobei das Verhältnis von Schwefelsäure zu gereiftem Calciumsulfat bei der Auslaugung zwischen 0,1 und 2,25 beträgt, bevorzugt zwischen 0,15 und 0,35.

8. Verfahren nach irgendeinem der Ansprüche 1 bis 5, welches ferner einen Schritt des Waschens der erwähnten festen Phase, hervorgegangen aus der erwähnten Trennung mit Wasser, und eventuell einen nachfolgenden Schritt des Trocknens der erwähnten festen Phase umfasst.

9. Verfahren nach irgendeinem der vorigen Ansprüche, in dem die erwähnte Lösung, welche die erwähnten Metalle der Seltenen Erden und die Schwefelsäure enthält, eine vorbestimmte Anzahl von Malen zwischen 2 und 8 erneut dem erwähnten Schritt der Auslaugung zugeführt wird.

## Claims

1. Method for treating calcium sulphate containing rare earths comprising the steps of:
- a sulphuric-acid leaching of calcium sulphate dihydrate containing said rare earths with the obtaining of a suspension formed from a solid phase containing said calcium sulphate dihydrate and from a liquid phase containing said rare earths in solution,
- a separation between said solid phase formed from said calcium sulphate dihydrate and from said liquid phase in the form of a liqueur containing said rare earths and sulphuric acid,
**characterised in that** said method further comprises, prior to said lixiviation, a step of maturing of calcium sulphate hemihydrate containing said rare earths with a crystallisation in calcium sulphate dihydrate by capturing of residual water and/or residual moisture.

2. Method according to claim 1, wherein said sulphuric acid is a solution of sulphuric acid having a concentration of 2 to 25%, preferably between 2 and 20%, more particularly between 5 and 18% and most preferably between 7 and 12, even between 8 and 10% by weight with respect to the total weight of the solution.

3. Method according to claim 1 or 2, wherein, prior to said step of maturation, said calcium sulphate hemihydrate containing said rare earths is neutralised by a basic agent.

4. Method according to any of claims 1 to 3, wherein said lixiviation is carried out under stirring for a predetermined period of time ranging from 0.5 to 4 hours, preferably from 1 to 2 hours.

5. Method according to any of claims 1 to 4, wherein said lixiviation is preceded with a step of disintegration of the crystals of calcium sulphate dihydrate formed during the maturation, during a period of time between 5 and 20 minutes, preferably at ambient temperature.

6. Method according to any of claims 1 to 5 wherein the lixiviation temperature is between 10 and 70°C, and is preferably ambient temperature, namely between 20 and 30°C.

7. Method as claimed in any preceding claim, wherein the ratio of sulphuric acid/calcium sulphate matured during the lixiviation is between 0.1 and 2.25, preferably 0.15 to 0.35.

8. Method according to any of claims 1 to 5, further comprising a step of washing said solid phase coming from said separation with water, and possibly, a later step of drying said solid phase.

9. Method as claimed in any preceding claim, wherein said liqueur containing said rare earths and sulphuric acid is recirculated a predetermined number of times between 2 and 8 at said step of lixiviation.
